# EUROPEAN PATENT SPECIFICATION

(11) **EP 3 682 982 B1**
(45) Date of publication and mention of the grant of the patent: **29.06.2022**
(21) Application number: 17925051.9
(22) Date of filing: 10.11.2017
(51) Int. Cl.: B21J 5/08, B21J 1/04, B21J 1/06, B21K 1/76, B23K 15/00, B21J 5/00, B21J 1/00, B21K 1/28, B23P 15/00, B21H 1/06

(54) **MANUFACTURING PROCESS FOR LARGE ANNULAR FORGED PIECE**
VERFAHREN ZUR HERSTELLUNG EINES GROSSEN RINGFÖRMIGEN SCHMIEDESTÜCKES
PROCÉDÉ DE FABRICATION POUR UNE PIÈCE FORGÉE ANNULAIRE DE GRANDES DIMENSIONS

(30) Priority: 15.09.2017 CN 201710839239
(43) Date of publication of application: 22.07.2020
(73) Proprietor: China Institute of Atomic Energy, Beijing 102413 (CN)
(72) Inventor: LI, Yaping, Beijing 102413 (CN); XU, Haitao, Beijing 102413 (CN); SUN, Gang, Beijing 102413 (CN); LIU, Zhaoyang, Beijing 102413 (CN); YAN, Chunguang, Beijing 102413 (CN); LIU, Qiang, Beijing 102413 (CN); WANG, Mingzheng, Beijing 102413 (CN); ZHANG, Donghui, Beijing 102413 (CN); SUN, Mingyue, Beijing 102413 (CN)
(74) Representative: Global IP Europe Patentanwaltskanzlei
(86) International application number: PCT/CN2017/110491
(87) International publication number: WO 2019/051980

(56) References cited:
- EP-A1- 3 006 787
- WO-A1-2016/150024
- CN-A- 106 312 454
- CN-A- 106 607 668
- CN-A- 107 717 341
- DE-A1-102009 010 149

## Description

### Technical field

The invention relates to a manufacturing method for metals and alloys, in particular to a manufacturing process for large annular forgings such as in EP 3006787 A1.

### Background

The development history of human kinds is, in a sense, a history of the usage and development of materials. The rapid development of the society has put forward higher requirements on manufacturing and processing of materials. New materials and advantaged manufacturing technologies thereof become the key to upgrading of the national supporting industries. Take the large annular forgings as an example. The large annular forgings are widely applied to large containers of aerospace, petroleum, chemical and nuclear power plants. The manufacturing technology for large annular forgings directly determines the manufacturing level of major equipment.

Under the existing industrial level, steel ingots used for the annular forgings are made of die-casting ingots or electroslag ingots. For the large-size annular forgings, an assembly welding type structure is often adopted. The assembly welding process is high in cost and long in manufacturing cycle. In addition, the weld joint position is of a cast-state structure and its performance is much lower than that of base metals, so the reliability of products is affected.

EP 3006787 A1 discloses a piston ring having a nominal diameter d1 of 200 mm or more and less than 1100 mm, which is formed from a hot-forged, cylindrical steel body.

CN 106607668 A discloses a manufacturing method for stainless steel clad plates allowing coating sides to be easily welded. The manufacturing method includes step 1: machining peripheries of a base plate into inclined surfaces, removing oxidation layers on surfaces to be clad through grinding, sequentially washing the surfaces to be clad and blow-drying the surfaces to be clad; step 2: buckling the base plate and a clad plate, welding the peripheries of the base plate and peripheries of the clad plate in a sealing mode and carrying out vacuumization; step 3: removing impurities such as oxide skin on peripheries of a plate blank and pouring molten steel with the same material as the clad plate in a protective atmosphere; step 4: stacking stainless steel clad surfaces of two clad blanks with the sides coated, applying a release agent in the middle, carrying out full welding on heads of the clad blanks and carrying out spot welding on two side edges of the clad blanks; and step 5: heating and rolling the clad blanks.

WO 2016 150024 A1 discloses a method for preparing homogenized forge pieces, comprising firstly billet prefabricating; then billet forge welding and homogenizing; and finally forming forging the billets into final specifications and sizes. The method adopts a static ingot, continuous billets which are relatively cheap are utilized for overlapping and forging.

In order to meet the requirements of a safe, reliable and economical design, it's necessary to develop a manufacturing process for large annular forgings, which is low in cost and short in construction period.

### Summary

The invention aims to provide a safer, more reliable and more economical manufacturing process for large annular forgings.

The technical scheme of the invention is as follows: the manufacturing process for large annular forgings comprises the following steps:
(S1) preparing prefabricated blanks;
(S2) preparing a level I hourglass-shaped module from the prefabricated blanks;
(S3) performing upsetting deformation along the height direction and inter-forging heat preservation after heating the level I hourglass-shaped module to prepare an intermediate blank;
(S4) preparing a level II hourglass-shaped module from the intermediate blanks;
(S5) performing upsetting deformation along the height direction and inter-forging heat preservation after heating the Level II hourglass-shaped module to prepare a blank;
(S6) manufacturing and processing the blank into an annular forge piece.

Further, as the above manufacturing process for large annular forgings, steps (S4) to (S5) in the process can be repeated for multiple times, the intermediate blanks are made into a multi-level hourglass-shaped module and then the multi-level hourglass-shaped module is made into the blank.

Further, as the above manufacturing process for large annular forgings, the prefabricated blanks in step (S1) are constructed by casting blank, forging blank or rolling blank elements and are formed through seal welding and forging; or the prefabricated blanks in step (S1) are directly prepared from forging blanks by machining.

Further, as the above manufacturing process for large annular forgings, in step (S2), the prefabricated blanks are made into frustum-shaped units, the small surfaces of the two frustum-shaped units are stacked together and vacuum electron beam welding is conducted to prepare the level I hourglass-shaped modules; and in step (S4), the intermediate blanks are made into frustum-shaped units, the small surfaces of the two frustum-shaped units are stacked together and vacuum electron beam welding is conducted to prepare the level II hourglass-shaped modules. The frustum-shaped units can be of circular cone frustum shapes or rectangular pyramid frustum shapes, and smooth transition at the intermediate interface position of the two frustum-shaped units should be guaranteed.

Further, as the above manufacturing process for large annular forgings, the depth of joints for vacuum electron beam welding is 20 to 50 mm.

Further, as the above manufacturing process for large annular forgings, the height-diameter ratio of the hourglass-shaped modules in step(S2) or step(S4) is between 1 and 3.

Further, as the above manufacturing process for large annular forgings, the height reduction of implementing upsetting deformation on the hourglass-shaped modules in step(S3) or step(S5) is equal to 30 to 55 percent of the total height of the blanks.

Further, as the above manufacturing process for large annular forgings, the blanks after upsetting in step(S3) or step(S5) are subjected to high-temperature diffusion bonding, wherein the heating temperature is not less than 1200 °C and the heat preservation time after temperature reaching stable is not less than 12 hours.

Further, as the above manufacturing process for large annular forgings, in step (S6), the blank is manufactured and processed into the annular forge piece through upsetting, punching, reaming and flatting processes.

The invention has the following beneficial effects: according to the manufacturing process for large annular forgings, which is provided by the invention, the prefabricated blank is made into the hourglass-shaped module, the hourglass-shaped construction blank can centralize the deformation in the upsetting process around the interface position, and generation of the surface tensile stress is avoided, so that the blank is subjected to big pressure stress uniformly and the surface tensile stress state of the blank is obviously optimized. Meanwhile, the minimum section area of the hourglass-shaped blank is small, so pressure needed by forging can be effectively reduced. Compared with a structure manufactured by an assembly welding process, the large annular forge piece manufactured by the process has the following advantages: materials are saved by about 30 percent, the manufacturing cycle is shortened by about 50 percent and the manufacturing cost is comprehensively reduced by about 15 percent. Furthermore, the annular forge piece manufactured by the process owns small performance fluctuation, wherein the strength fluctuation is 30 to 50 MPa and the impact toughness fluctuation is 50 to 70 J, so that the safety and reliability of the annular forge piece under service are greatly improved.

### Brief Description of Drawings

FIG. 1 is a flow schematic diagram of the manufacturing process for large annular forgings of the invention.
FIG. 2 is a flow schematic diagram of the manufacturing process for the annular forge piece in the embodiment 1 of the invention.
FIG. 3 is a flow schematic diagram of the manufacturing process for the annular forge piece in the embodiment 2 of the invention.

### Description of Embodiments

The invention is described in details below with reference to the accompanying drawings and embodiments.

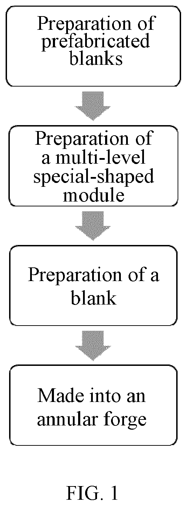

As shown in FIG. 1, described from the overall technological process, a special-shaped metal construction forming method comprises the following steps: step (1) preparing a prefabricated blank; step (2) preparing a level I special-shaped module (hourglass-shaped module) from the prefabricated blank; step (3) performing upsetting deformation along the height direction and inter-forging heat preservation after heating the level I special-shaped module to prepare an intermediate blank; step (4) preparing a level II special-shaped module (hourglass-shaped module) from the intermediate blank; step (5) performing upsetting deformation along the height direction and inter-forging heat preservation after heating the level II hourglass-shaped module to prepare a blank; and step (6) manufacturing and processing the blank into an annular forge piece.

In the process of manufacturing the blank, steps (4) to (5) can be repeated for multiple times, the intermediate blank is made into a multi-level special-shaped module, the advantages of the hourglass-shaped module are completely utilized, the volume and weight of the intermediate blank are continuously enlarged, and the blank is finally prepared.

The prefabricated blanks in step (1) can be constructed by casting blank, forging blank or height blank elements and be formed through seal welding and forging (refer to the description of "a homogeneous metal construction forming method" in CN201511026272.X for the method); or the prefabricated blanks are directly prepared from forging blanks by machining.

On one hand, one charasteristic of the invention is embodied in the manufacturing process of the blank in steps (2) to (5). The multilevel hourglass-shaped modules are prepared from the prefabricated blanks, the hourglass-shaped construction blanks can centralize the deformation in the upsetting process on the interface position, and generation of the surface tensile stress is avoided, so that the blank is subjected to big pressure stress uniformly and the surface tensile stress state of the blank is obviously improved. Therefore, the prefabricated blanks or the intermediate blanks are made into the frustum-shaped units firstly, and the frustum-shaped units can be prepared through a forging and/or machining mode. The small surfaces of the two frustum-shaped units are stacked together and vacuum electron beam welding is conducted to prepare the hourglass-shaped modules. In the embodiments, the frustum-shaped units can be of circular cone frustum shapes or rectangular pyramid frustum shapes (also can be of other frustum shapes, such as a hexagonal pyramid frustum and an octagonal pyramid frustum). The minimum section area of the hourglass-shaped blank is small, so pressure needed by forging can be effectively reduced. However, when the middle sunken position is narrow, fold defects will occur in the forging process; and when the middle sunken position is wide, the effect of reducing the forging pressure will be weakened. Thus, when the hourglass-shaped blank is designed, the size of the included angle between the lower bottom edge and the waist edge of the longitudinal trapezoid section of each frustum-shaped unit should be taken into consideration so as to be within an ideal range. Meanwhile, smooth transition of the trapezoidal blank is conducted, so that the fact that the trapezoidal blank is folded at the intermediate interface position is avoided and a sharp corner at the junction of the two trapezoidal blanks is avoided. The junction of the two frustum-shaped units is realized by a vacuum electron beam welding mode, a to-be-welded surface is processed and cleaned and then the periphery of the to-be-welded blank in a vacuum chamber is subjected to vacuum electron beam seal welding, wherein the depth of joints for vacuum electron beam welding is 20 to 50 mm. The height-diameter ratio of the hourglass-shaped module formed after welding is between 1 and 3. The height-diameter ratio described here refers to the ratio of the total height of the hourglass-shaped module to the diameter of the bottom surface of the circular cone frustum (or the side length of the bottom surface of the rectangular pyramid frustum).

In the manufacturing process of the blank in steps (2) to (5), another characteristic of the method is that the large forge piece is divided into a plurality of modules to perform construction by a multi-level modular manufacturing process. According to the process method, multiple pieces can be put into production, so that the production efficiency can be effectively improved and the construction period can be effectively guaranteed.

In the forging process of the blank in step(3) or step(5), the blank is heated firstly, wherein the highest heating temperature is not less than 1200 °C; then the hourglass-shaped blank is subjected to upsetting deformation along the height direction; and the heated blank is placed on a press operating platform and is subjected to upsetting along the height direction, wherein the height reduction of the upsetting deformation is equal to 30 to 55 percent of the total height of the blank. Then, the blank after upsetting is subjected to high-temperature diffusion bonding and the blank after upsetting is sent back to a heating furnace to perform heating, wherein the heating temperature is not less than 1200 °C and the heat preservation time after temperature reaching stable is not less than 12 hours.

On the other hand, another characteristic of the method is embodied in step (6), wherein the blank is manufactured and processed into the annular forge piece by upsetting, punching, reaming and flatting processes. The method has overcome the defects of a higher cost and longer manufacturing cycle of the traditional assembling welding process, and has solved the problems of product reliability caused by the performance of the weld joint position much lower than that of base metals.

### Embodiment 1

The target product of the embodiment is a large annular forge piece.

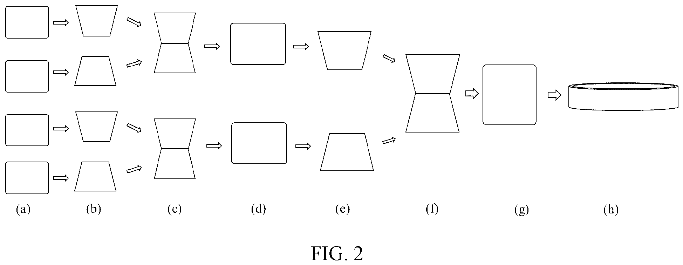

In the first step, steel ingots are obtained by a pouring mode and the steel ingots are heated and are subjected to blooming and forging to form prefabricated blanks, wherein the size of the prefabricated blanks is as follows: 1200 mm in diameter and 1500 mm in height, as shown in FIG. 2(a).

In the second step, the prefabricated blanks are heated before being forged, wherein the highest heating temperature is not less than 1200 °C. The prefabricated blanks are subjected to die forging to form level I frustum-shaped units, as shown in FIG. 2(b).

In the third step, the level I frustum-shaped units are subjected to vacuum electron beam welding. In a vacuum chamber, the superposed level I frustum-shaped unit blanks are subjected to vacuum electron beam seal welding to form level I hourglass-shaped modules, wherein the welding depth is 20 to 50 mm, as shown in FIG. 2(c).

In the fourth step, the welded level I hourglass-shaped modules are heated before being forged, wherein the highest heating temperature is not less than 1200 °C. The heated blanks are placed on a press operating platform, so that the height direction of the blanks is along a vertical direction. Upsetting is implemented along the height direction, wherein the height reduction is equal to 30 to 55 percent of the total height of the blanks. The blanks are subjected to high-temperature diffusion bonding. The blanks after upsetting are sent back to a heating furnace to perform heating, wherein the heating temperature is not less than 1200 °C and the heat preservation time after temperature reaching stable is not less than 12 hours. Then the blanks are subjected to rounding, as shown in FIG. 2(d).

In the fifth step, the blanks are heated before being forged, wherein the highest heating temperature is not less than 1200 °C. The blanks are subjected to die forging to form level II frustum-shaped units, as shown in FIG. 2(e).

In the sixth step, the level II frustum-shaped units are subjected to vacuum electron beam welding. In the vacuum chamber, the superposed level II frustum-shaped unit blanks are subjected to vacuum electron beam seal welding to form level II hourglass-shaped modules, wherein the welding depth is 20 to 50 mm, as shown in FIG. 2(f).

In the seventh step, the welded level II hourglass-shaped modules are heated before being forged, wherein the highest heating temperature is not less than 1200 °C. The heated blanks are placed on a press operating platform, so that the height direction of the blanks is along the vertical direction. Upsetting is implemented along the height direction, wherein the height reduction is equal to 30 to 55 percent of the total height of the blanks. The blanks are subjected to high-temperature diffusion bonding. The blanks after upsetting are sent back to the heating furnace to perform heating, wherein the heating temperature is not less than 1200 °C and the heat preservation time after temperature reaching stable is not less than 12 hours. Then the blanks are subjected to rounding to prepare a blank, as shown in FIG. 2(g).

In the eighth step, the blank is subjected to upsetting, punching, reaming and flatting. The blanks are processed on a 16-m ring rolling mill to obtain the final size, as shown in FIG. 2(h).

In the embodiment, the fifth step to the seventh step can be repeatedly conducted, the intermediate blanks are made into multilevel hourglass-shaped modules and the multilevel hourglass-shaped modules are made into the blank.

### Embodiment 2

The target product of the embodiment is a large annular forge piece.

In the first step, a stainless steel continuous casting plate blank prepared by a continuous casting mode is cut into 11 blanks with the specifications of 1500 mm ^{∗} 1500 mm ^{∗} 200 mm. The six surfaces of each continuous casting blank are machined and to-be-welded surfaces are cleaned, so that fresh metal surfaces are exposed.

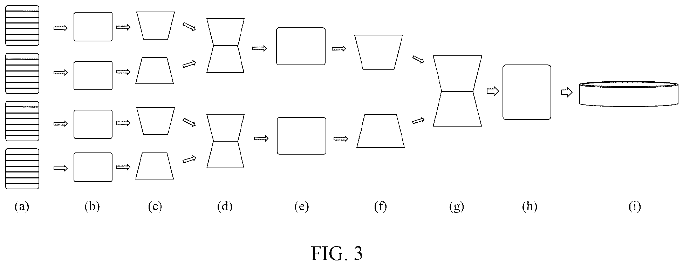

In the second step, the blanks are subjected to vacuum electron beam welding. In a vacuum chamber, the peripheries of the superposed blanks are subjected to vacuum electron beam seal welding, wherein the welding depth is 20 to 50 mm and the size after welding is 1500 mm in width, 1500 mm in length and 2200 mm in height, as shown in FIG. 3(a).

In the third step, the welded blanks are heated before being forged, wherein the highest heating temperature is not less than 1200 °C and the heating speed is required to be less than 100 °C/h. The heated blanks are placed on a press operating platform, so that the height direction of the blanks is along a vertical direction. Upsetting is implemented along the height direction, wherein the height reduction is equal to 30 to 55 percent of the total height of the blanks. The blanks are subjected to high-temperature diffusion bonding. The blanks after upsetting are sent back to a heating furnace to perform heating, wherein the heating temperature is not less than 1200 °C and the heat preservation time after temperature reaching stable is not less than 12 hours.

In the fourth step, the blanks are subjected to upsetting in three directions and are subjected to edge chamfering, chamfering and machining to form prefabricated blanks, as shown in FIG. 3 (b).

In the fifth step, the prefabricated blanks are heated before being forged, wherein the highest heating temperature is not less than 1200 °C. The prefabricated blanks are subjected to die forging to form level I frustum-shaped units, as shown in FIG. 3(c).

In the sixth step, the level I frustum-shaped units are subjected to vacuum electron beam welding. In a vacuum chamber, the superposed level I frustum-shaped unit blanks are subjected to vacuum electron beam seal welding to form level I hourglass-shaped modules, wherein the welding depth is 20 to 50 mm, as shown in FIG. 3(d).

In the seventh step, the welded special-shaped modules are heated before being forged, wherein the highest heating temperature is not less than 1200 °C. The heated blanks are placed on a press operating platform, so that the height direction of the blanks is along a vertical direction. Upsetting is implemented along the height direction, wherein the height reduction is equal to 30 to 55 percent of the total height of the blanks. The blanks are subjected to high-temperature diffusion bonding. The blanks after upsetting are sent back to a heating furnace to perform heating, wherein the heating temperature is not less than 1200 °C and the heat preservation time after temperature reaching stable is not less than 12 hours. Then the blanks are subjected to rounding, as shown in FIG. 3(e).

In the eight step, the blanks are heated before being forged, wherein the highest heating temperature is not less than 1200 °C. The blanks are subjected to die forging to form level II frustum-shaped units, as shown in FIG. 3(f).

In the ninth step, the level II frustum-shaped units are subjected to vacuum electron beam welding. In the vacuum chamber, the superposed level II frustum-shaped unit blanks are subjected to vacuum electron beam seal welding to form level II hourglass-shaped modules, wherein the welding depth is 20 to 50 mm, as shown in FIG. 3(g).

In the tenth step, the welded level II hourglass-shaped modules are heated before being forged, wherein the highest heating temperature is not less than 1200 °C. The heated blanks are placed on a press operating platform, so that the height direction of the blanks is along the vertical direction. Upsetting is implemented along the height direction, wherein the height reduction is equal to 30 to 55 percent of the total height of the blanks. The blanks are subjected to high-temperature diffusion bonding. The blanks after upsetting are sent back to a heating furnace to perform heating, wherein the heating temperature is not less than 1200 °C and the heat preservation time after temperature reaching stable is not less than 12 hours. Then the blanks are subjected to rounding to prepare a blank, as shown in FIG. 3(h).

In the eleventh step, the blank is subjected to upsetting, punching, reaming and flatting. The blank is processed on a 16-m ring rolling mill to obtain the final size, as shown in FIG. 3(i).

In the embodiment, the eighth step to the tenth step can be repeatedly conducted, the intermediate blanks are made into multilevel hourglass-shaped modules and the multilevel hourglass-shaped modules are made into the blank.

## Claims

1. A manufacturing process for large annular forgings is **characterised by** the following steps:
(S1) preparing prefabricated blanks;
(S2) preparing a level I hourglass-shaped module from the prefabricated blanks;
(S3) performing upsetting deformation along the height direction and inter-forging heat preservation after heating the level I hourglass-shaped module to prepare an intermediate blank;
(S4) preparing a level II hourglass-shaped module from the intermediate blanks;
(S5) performing upsetting deformation along the height direction and inter-forging heat preservation after heating the level II hourglass-shaped module to prepare a blank;
(S6) manufacturing and processing the blank into an annular forge piece.

2. The manufacturing process for large annular forgings according to claim 1, wherein steps (S4) to (S5) in the process can be repeated for multiple times, the intermediate blanks are made into a multi-level hourglass-shaped module and the multi-level hourglass-shaped module is made into the blank.

3. The manufacturing process for large annular forgings according to claim 1 or 2, wherein the prefabricated blanks in step (S1) are constructed by casting blank, forging blank or rolling blank elements and are formed through seal welding and forging; or the prefabricated blanks in step (S1) are directly prepared from forging blanks by machining.

4. The manufacturing process for large annular forgings according to claim 1 or 2, wherein in step (S2), the prefabricated blanks are made into frustum-shaped units, the small surfaces of the two frustum-shaped units are stacked together and vacuum electron beam welding is conducted to prepare the level I hourglass-shaped modules; and in step (S4), the intermediate blanks are made into frustum-shaped units, the small surfaces of the two frustum-shaped units are stacked together and vacuum electron beam welding is conducted to prepare the level II hourglass-shaped modules.

5. The manufacturing process for large annular forgings according to claim 4, wherein the frustum-shaped units can be of circular cone frustum shapes or rectangular pyramid frustum shapes, and smooth transition at the intermediate interface position of the two frustum-shaped units should be guaranteed.

6. The manufacturing process for large annular forgings according to claim 4, wherein the depth of joints for vacuum electron beam welding is 20 to 50 mm.

7. The manufacturing process for large annular forgings according to claim 1 or 2, wherein the height-diameter ratio of the hourglass-shaped modules in step(S2) or step(S4) is between 1 and 3.

8. The manufacturing process for large annular forgings according to claim 1 or 2, wherein the height reduction of implementing upsetting deformation on the hourglass-shaped modules in step(S3) or step (S5) is equal to 30 to 55 percent of the total height of the blanks.

9. The manufacturing process for large annular forgings according to claim 1 or 2, wherein the blanks after upsetting in step(S3) or step(S5) are subjected to high-temperature diffusion bonding, wherein the heating temperature is not less than 1200 °C and the heat preservation time after temperature reaching stable is not less than 12 hours.

10. The manufacturing process for large annular forgings according to claim 1 or 2, wherein in step (S6), the blank is manufactured and processed into the annular forge piece through upsetting, punching, reaming and flatting processes.

## Patentansprüche

1. Herstellungsverfahren für große ringförmige Schmiedestücke, **gekennzeichnet durch** die folgenden Schritte:
(S1) Herstellen vorgefertigter Rohlinge;
(S2) Herstellen eines sanduhrförmigen Moduls der Stufe I aus den vorgefertigten Rohlingen;
(S3) Durchführen einer Stauchverformung entlang der Höhenrichtung und einer Zwischenschmiede-Wärmeerhaltung nach dem Erwärmen des sanduhrförmigen Moduls der Stufe I, um einen Zwischenrohling herzustellen;
(S4) Herstellen eines sanduhrförmigen Moduls der Stufe II aus den Zwischenrohlingen;
(S5) Durchführen einer Stauchverformung entlang der Höhenrichtung und einer Zwischenschmiede-Wärmeerhaltung nach dem Erwärmen des sanduhrförmigen Moduls der Stufe II, um einen Rohling herzustellen;
(S6) Herstellen und Bearbeiten des Rohlings zu einem ringförmigen Schmiedestück.

2. Herstellungsverfahren für große ringförmige Schmiedestücke nach Anspruch 1, wobei die Schritte (S4) bis (S5) im Verfahren mehrfach wiederholt werden können, die Zwischenrohlinge zu einem mehrstufigen sanduhrförmigen Modul hergestellt werden und das mehrstufige sanduhrförmige Modul zu dem Rohling gemacht wird.

3. Herstellungsverfahren für große ringförmige Schmiedestücke nach Anspruch 1 oder 2, wobei die vorgefertigten Rohlinge in Schritt (S1) durch Gussrohlinge, Schmiederohlinge oder Walzrohlinge aufgebaut und durch Dichtungsschweißen und Schmieden geformt werden; oder die vorgefertigten Rohlinge in Schritt (S1) direkt aus Schmiederohlingen durch Bearbeitung hergestellt werden.

4. Herstellungsverfahren für große ringförmige Schmiedestücke nach Anspruch 1 oder 2, wobei in Schritt (S2) die vorgefertigten Rohlinge zu kegelstumpfförmigen Einheiten geformt werden, die kleinen Oberflächen der beiden kegelstumpfförmigen Einheiten aufeinander gestapelt werden und ein Vakuum-Elektronenstrahlschweißen durchgeführt wird, um die sanduhrförmigen Module der Stufe I herzustellen; und in Schritt (S4) die Zwischenrohlinge zu kegelstumpfförmigen Einheiten geformt werden, die kleinen Oberflächen der beiden kegelstumpfförmigen Einheiten aufeinander gestapelt werden und ein Vakuum-Elektronenstrahlschweißen durchgeführt wird, um die sanduhrförmigen Module der Stufe II herzustellen.

5. Herstellungsverfahren für große ringförmige Schmiedestücke nach Anspruch 4, wobei die kegelstumpfförmigen Einheiten kreisförmige Kegelstumpfformen oder rechteckige Pyramidenstumpfformen aufweisen können und ein glatter Übergang an der Zwischenschnittstelle der beiden kegelstumpfförmigen Einheiten gewährleistet sein sollte.

6. Herstellungsverfahren für große ringförmige Schmiedestücke nach Anspruch 4, wobei die Tiefe der Verbindungsstellen beim Vakuum-Elektronenstrahlschweißen 20 bis 50 mm beträgt.

7. Herstellungsverfahren für große ringförmige Schmiedeteile nach Anspruch 1 oder 2, wobei das Höhen-DurchmesserVerhältnis der sanduhrförmigen Module in Schritt (S2) oder Schritt (S4) zwischen 1 und 3 liegt.

8. Herstellungsverfahren für große ringförmige Schmiedestücke nach Anspruch 1 oder 2, wobei die Höhenreduzierung durch Stauchverformung der sanduhrförmigen Module in Schritt (S3) oder Schritt (S5) 30 bis 55% der Gesamthöhe der Rohlinge beträgt.

9. Herstellungsverfahren für große ringförmige Schmiedestücke nach Anspruch 1 oder 2, wobei die Rohlinge nach dem Stauchen in Schritt (S3) oder Schritt (S5) einer Hochtemperatur-Diffusionsverbindung unterzogen werden, wobei die Erwärmungstemperatur nicht weniger als 1200°C beträgt und die Wärmeerhaltungszeit nach Erreichen der stabilen Temperatur nicht weniger als 12 Stunden beträgt.

10. Herstellungsverfahren für große ringförmige Schmiedestücke nach Anspruch 1 oder 2, wobei in Schritt (S6) der Rohling hergestellt und durch Stauchen, Stanzen, Reiben und Flachdrücken zum ringförmigen Schmiedestück verarbeitet wird.

## Revendications

1. Procédé de fabrication pour pièces forgées annulaires de grandes dimensions, **caractérisé par** les étapes suivantes :
(S1) préparation d'ébauches préfabriquées ;
(S2) préparation d'un module en forme de sablier de niveau I à partir des ébauches préfabriquées ;
(S3) exécution d'une déformation par refoulement dans le sens de la hauteur et conservation de chaleur entre les processus de forgeage après chauffage du module en forme de sablier de niveau I afin de préparer une ébauche intermédiaire ;
(S4) préparation d'un module en forme de sablier de niveau II à partir des ébauches intermédiaires ;
(S5) exécution d'une déformation par refoulement dans le sens de la hauteur et conservation de chaleur entre les processus de forgeage après chauffage du module en forme de sablier de niveau II afin de préparer une ébauche ;
(S6) fabrication et traitement de l'ébauche en pièce forgée annulaire.

2. Procédé de fabrication pour pièces forgées annulaires de grandes dimensions selon la revendication 1, où les étapes (S4) à (S5) du processus peuvent être répétées plusieurs fois, les ébauches intermédiaires sont transformées en module en forme de sablier de plusieurs niveaux et le module en forme de sablier de plusieurs niveaux est transformé en ébauche.

3. Procédé de fabrication pour pièces forgées annulaires de grandes dimensions selon la revendication 1 ou la revendication 2, où les ébauches préfabriquées lors de l'étape (S1) sont conçues par moulage d'ébauche, forgeage d'ébauche ou laminage d'éléments d'ébauche et sont formées par soudage et forgeage ; ou les ébauches préfabriquées lors de l'étape (S1) sont préparées directement à partir d'ébauches à forger par usinage.

4. Procédé de fabrication pour pièces forgées annulaires de grandes dimensions selon la revendication 1 ou la revendication 2, où lors de l'étape (S2), les ébauches préfabriquées sont transformées en unités de forme tronconique, les petites surfaces des deux unités de forme tronconique sont empilées et un soudage par faisceau d'électrons sous vide est exécuté pour préparer les modules en forme de sablier de niveau I ; et lors de l'étape (S4), les ébauches intermédiaires sont transformées en unités de forme tronconique, les petites surfaces des deux unités de forme tronconique sont empilées et un soudage par faisceau d'électrons sous vide est exécuté pour préparer les modules en forme de sablier de niveau II.

5. Procédé de fabrication pour pièces forgées annulaires de grandes dimensions selon la revendication 4, où les unités de forme tronconique peuvent être à tronc de cône circulaire ou à tronc de cône pyramidal rectangulaire, et une transition continue à l'emplacement d'interface intermédiaire des deux unités de forme tronconique doit être assurée.

6. Procédé de fabrication pour pièces forgées annulaires de grandes dimensions selon la revendication 4, où la profondeur des joints pour soudage par faisceau d'électrons sous vide est comprise entre 20 et 50 mm.

7. Procédé de fabrication pour pièces forgées annulaires de grandes dimensions selon la revendication 1 ou la revendication 2, où le rapport hauteur-diamètre des modules en forme de sablier lors de l'étape (S2) ou de l'étape (S4) est compris entre 1 et 3.

8. Procédé de fabrication pour pièces forgées annulaires de grandes dimensions selon la revendication 1 ou la revendication 2, où la réduction de hauteur par application de la déformation par refoulement sur les modules en forme de sablier lors de l'étape (S3) ou de l'étape (S5) représente 30 à 55 % de la hauteur totale des ébauches.

9. Procédé de fabrication pour pièces forgées annulaires de grandes dimensions selon la revendication 1 ou la revendication 2, où, après refoulement lors de l'étape (S3) ou de l'étape (S5), les ébauches sont soumises à une liaison par diffusion sous haute température, où la température de chauffage n'est pas inférieure à 1200 °C et le temps de conservation de chaleur après stabilisation de température n'est pas inférieur à 12 heures.

10. Procédé de fabrication pour pièces forgées annulaires de grandes dimensions selon la revendication 1 ou la revendication 2, où lors de l'étape (S6), l'ébauche est fabriquée et traitée en pièce forgée annulaire par processus de refoulement, poinçonnage, alésage et aplatissement.
